# DEMANDE DE BREVET EUROPEEN

(11) **EP 4 187 468 A1**
(43) Date de publication de la demande: **31.05.2023**
(21) Numéro de dépôt: 22205457.9
(22) Date de dépôt: 04.11.2022
(51) Int. Cl.: G06Q 20/36, G06Q 20/40

(54) **GESTION D'UN PORTEFEUILLE ÉLECTRONIQUE ASSOCIÉ À UN ÉQUIPEMENT CONNECTÉ PARTAGÉ**

(30) Priorité: 30.11.2021 FR 2112766
(71) Demandeur: Orange, 92130 Issy-les-Moulineaux (FR)
(72) Inventeur: LE HUEROU, Emmanuel, 92320 Châtillon (FR); TOUTAIN, François, 92320 Châtillon (FR)

(57) **Abrégé**

L'invention se rapporte à un procédé de gestion d'un portefeuille électronique associé à un équipement connecté partagé, le portefeuille électronique comportant une pluralité de cartes virtuelles de transaction. Le procédé comporte les étapes suivantes :
- réception d'une requête de transaction en provenance d'un dispositif de fourniture de services ou de produits ;
- détermination d'une séquence d'utilisation d'au moins deux cartes virtuelles de transaction du portefeuille électronique pour la requête de transaction reçue, par analyse de caractéristiques associées aux cartes virtuelles de transaction du portefeuille électronique et/ou en d'une identification d'au moins deux utilisateurs de l'équipement partagé.

L'invention se rapporte également à un dispositif de gestion mettant en œuvre le procédé ainsi qu'à des équipements connectés et partagés tels qu'un véhicule connecté partagé ou une habitation connectée partagée.

## Description

### Domaine de l'invention

L'invention concerne la gestion d'un portefeuille électronique associé à un équipement connecté, le portefeuille électronique comportant une pluralité de cartes virtuelles, bons ou tickets virtuels.

Plus particulièrement, la présente invention concerne la détermination de séquences d'utilisation de telles cartes virtuelles dans un équipement connecté partagé entre plusieurs utilisateurs. Un tel équipement connecté partagé est par exemple un véhicule connecté ou bien une maison connectée. On entend par équipement connecté le fait que l'équipement a la capacité de communiquer avec d'autres équipements ou dispositifs externes ou internes pour envoyer, recevoir des messages, des commandes ou toutes autres données.

### Art antérieur

Les véhicules connectés commencent à voir le jour et ont pour perspectives d'offrir différents services à leurs occupants en dehors du transport et de la navigation. En effet, il est envisagé que ces véhicules qui possèdent leur propre infrastructure informatique, puissent enregistrer des informations personnelles des utilisateurs du véhicule. Il est connu par exemple que le système d'information du véhicule connaisse les caractéristiques personnelles de positionnement du siège conducteur, du rétroviseur et autre adaptation liée au conducteur. Ainsi, lorsque le conducteur est identifié, ses paramètres de conduite sont pris en compte pour adapter la position de conduite ou autres services que le système d'information peut mettre en œuvre.

On commence également à envisager des systèmes informatiques de véhicule qui accèdent à un portefeuille utilisateur dans lequel est enregistrée une carte de paiement qui peut être utilisée par exemple lors d'achat tels que la fourniture en essence, la recharge en électricité ou le paiement d'un parking. C'est ce que prévoit par exemple la demande de brevet publiée US2021/008912 où il est décrit l'enregistrement d'une carte de paiement dans le système d'information de la voiture, qui est sélectionnée lors de l'identification du conducteur.

Ce système décrit ici ne prévoit pas la possibilité pour un même utilisateur d'avoir plusieurs cartes de paiement virtuelles ou bien plusieurs cartes virtuelles utiles pour différentes transactions comme par exemple des cartes de réduction, cartes d'abonnement, cartes prépayées pour certains services, carte restaurant ou tout autre moyen d'obtenir un service.

La sélection d'une telle carte virtuelle ou ticket virtuel peut compliquer considérablement les actions que le conducteur peut avoir. En effet, s'il doit dérouler une liste de cartes à choisir à chaque fois qu'une transaction doit être réglée, cela peut être dangereux dans le contexte de conduite d'un véhicule. Il peut en effet perdre sa concentration, se tromper de carte ou bien tout simplement perdre du temps. Or toute perte de concentration doit être empêchée pour améliorer la sécurité du conducteur et de ses passagers.

De même, les systèmes décrits dans l'état de l'art ne permettent pas de gérer l'existence d'une pluralité de cartes de transaction appartenant à des utilisateurs différents. En effet dans un contexte de partage du véhicule, il se peut que le véhicule soit partagé par différentes personnes d'une même famille par exemple. Ces personnes peuvent prendre le véhicule partagé de façon individuelle ou bien en groupe.

Dans ce cas, le système informatique du véhicule doit pouvoir savoir quel moyen de transaction utiliser et éviter toutes manipulations inutiles des utilisateurs du véhicule.

Dans un contexte de maison connectée ou plus généralement d'habitation connectée, il existe des systèmes de gestion de ces espaces connectés qui permettent par exemple de gérer les appareils domotiques, les différents services numériques qui peuvent être utilisés dans ces espaces de vie. Il n'est pas prévu dans l'état de l'art, la gestion des services numériques ou tout autre service nécessitant une transaction, lorsque ces espaces de vie sont habités ou utilisés par une pluralité de personnes. Or le contexte multi-utilisateur est important pour des habitations en colocation par exemple ou pour des services de location, d'hôtellerie ou tout autre contexte de partage d'un lieu de vie. La sélection d'un ou de plusieurs moyens de paiement adaptés à ce contexte multi-utilisateur peut être source d'erreurs et de conflits entre utilisateurs lorsque cette sélection n'est pas assistée.

### Objet et résumé de l'invention

L'invention vient améliorer l'état de la technique.

A cet effet, l'invention concerne un procédé de gestion d'un portefeuille électronique associé à un équipement connecté partagé, le portefeuille électronique comportant une pluralité de cartes virtuelles de transaction, le procédé comportant les étapes suivantes :
- réception d'une requête de transaction en provenance d'un dispositif de fourniture de services ou de produits ;
- détermination d'une séquence d'utilisation d'au moins deux cartes virtuelles de transaction du portefeuille électronique pour la requête de transaction reçue, par analyse de caractéristiques associées aux cartes virtuelles de transaction du portefeuille électronique et/ou en fonction d'une identification d'au moins deux utilisateurs de l'équipement partagé.

Ainsi, une séquence d'utilisation d'une pluralité de cartes virtuelles est automatiquement déterminée par analyse des caractéristiques des cartes présentes dans le portefeuille électronique ou bien en fonction des utilisateurs de l'équipement, ce qui permet d'une part, de faciliter la sélection d'une pluralité de cartes virtuelles à utiliser pour cette transaction et d'autre part, d'éviter les erreurs de sélection. Dans un environnement où la concentration de l'utilisateur est importante pour sa sécurité, par exemple dans un véhicule, cette détermination assistée est primordiale.

Dans un mode de réalisation, la détermination de la séquence prend en compte en outre, un contexte de transaction à partir de données extraites de la requête de transaction et/ou de données issues de l'équipement partagé.

Ainsi la combinaison à la fois des caractéristiques des cartes virtuelles de transaction du portefeuille électronique et/ou des informations d'identification des utilisateurs et des informations de contexte de la transaction permet de déterminer des séquences de transaction pertinentes qui peuvent être proposées aux utilisateurs de l'équipement connecté.

Dans un mode de réalisation, l'identification des au moins deux utilisateurs de l'équipement partagé comprend une identification par défaut du propriétaire de l'équipement.

Ce mode de réalisation est particulièrement adapté pour une location ou un prêt de l'équipement connecté afin de bénéficier des cartes virtuelles du propriétaire qui sont comprises dans le portefeuille électronique associé à l'équipement.

Dans un mode de réalisation particulier, l'identification des au moins deux utilisateurs de l'équipement partagé comprend une identification des personnes présentes dans l'équipement partagé.

La détermination des séquences d'utilisation des cartes virtuelles est alors réalisée en fonction des personnes présentes dans l'équipement, ce qui permet d'obtenir des séquences adaptées aux transactions impliquant ces personnes présentes.

Dans une réalisation possible, la requête de transaction comprend des données d'informations de la transaction comprises dans le groupe :
- catégorisation de la transaction ;
- montant de la transaction ;
- identité du marchand vers lequel la transaction s'effectue.

Ces informations sont utiles à la détermination d'un contexte de transaction précis.

De même, dans le cas où l'équipement connecté partagé est un véhicule connecté partagé, les données issues du véhicule partagé utiles pour déterminer un contexte de transaction précis sont des données comprises dans le groupe :
- données de localisation du véhicule ;
- données temporelles ;
- données de vitesse du véhicule.

Dans un mode particulier de réalisation, des règles de transaction impliquant l'utilisation d'une ou de plusieurs cartes virtuelles du portefeuille électronique sont enregistrées dans le portefeuille électronique associé à l'équipement connecté partagé.

Ainsi, certaines règles de transaction peuvent être renseignées ou apprises afin de les prendre en compte pour déterminer les séquences de transaction. Ces règles de transaction permettent de limiter le nombre de séquences possibles à proposer aux utilisateurs de l'équipement connecté pour faciliter encore les interactions utilisateurs.

Selon un exemple de réalisation, les règles de transaction sont des règles de priorisation d'utilisation des cartes virtuelles enregistrées selon une catégorisation de la transaction ou selon une identification des personnes présentes dans l'équipement.

Une règle de transaction peut également être une répartition d'un montant de la transaction entre les personnes identifiées comme utilisateurs de l'équipement partagé.

Ces règles de transaction permettent ainsi d'affiner la détermination des séquences de transaction du procédé de gestion du portefeuille électronique.

Dans un mode de réalisation, la séquence d'utilisation d'au moins deux cartes virtuelles de transaction est affichée ou vocalisée sur une interface utilisateur de l'équipement partagé avec une demande de validation.

Ainsi, les utilisateurs de l'équipement connecté peuvent valider ou non la ou les séquences proposées par le procédé de gestion. Cette étape peut être utile lorsque plusieurs séquences sont proposées ou lorsqu'il n'existe pas de règles de transaction permettant d'affiner la détermination de ces séquences.

Selon une réalisation avantageuse, une mise à jour des règles de transaction est effectuée suite à la validation ou la non-validation de la séquence via l'interface utilisateur.

Ainsi, les règles de transaction enregistrées dans le portefeuille électronique sont apprises et mises à jour au fil du temps, ce qui permet d'affiner la détermination des séquences de transaction.

L'invention se rapporte également à un dispositif de gestion d'un portefeuille électronique associé à un équipement connecté partagé, le portefeuille électronique comportant une pluralité de cartes virtuelles de transaction, le dispositif de gestion comportant un module de communication, une mémoire et un processeur apte à piloter les étapes suivantes :
- réception d'une requête de transaction en provenance d'un dispositif de fourniture de services ou de produits ;
- détermination d'une séquence d'utilisation d'au moins deux cartes virtuelles de transaction du portefeuille électronique pour la requête de transaction reçue, par analyse de caractéristiques associées aux cartes virtuelles de transaction du portefeuille électronique et/ou en fonction d'une identification d'au moins deux utilisateurs de l'équipement partagé.

L'invention se rapporte aussi à un véhicule connecté comprenant un dispositif de gestion tel que décrit, elle se rapporte à un dispositif tel que décrit et compris dans un dispositif de gestion d'une habitation connectée partagée.

L'invention se rapporte enfin à un support d'informations lisible par un processeur sur lequel est enregistré un programme informatique comprenant des instructions pour l'exécution des étapes du procédé de gestion tel que décrit.

Le dispositif, véhicule connecté et support d'informations ont les mêmes avantages que ceux décrits pour le procédé qu'ils mettent en œuvre.

### Brève description des dessins

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] illustre un premier exemple d'application du procédé de gestion d'un portefeuille électronique selon l'invention, associé à un équipement partagé de type véhicule connecté ;
[Fig 2] illustre un deuxième exemple d'application du procédé de gestion d'un portefeuille électronique selon l'invention, associé à un équipement partagé de type habitation connectée ;
[Fig 3] illustre sous forme d'organigramme, un mode de réalisation du procédé de gestion d'un portefeuille électronique selon l'invention ;
[Fig 4a] illustre sous forme de table un premier exemple d'enregistrement de cartes virtuelles dans un portefeuille numérique selon l'invention ;
[Fig 4b] illustre sous forme de table un deuxième exemple d'enregistrement de cartes virtuelles dans un portefeuille numérique selon l'invention ;

### Description détaillée des modes de réalisation de l'invention

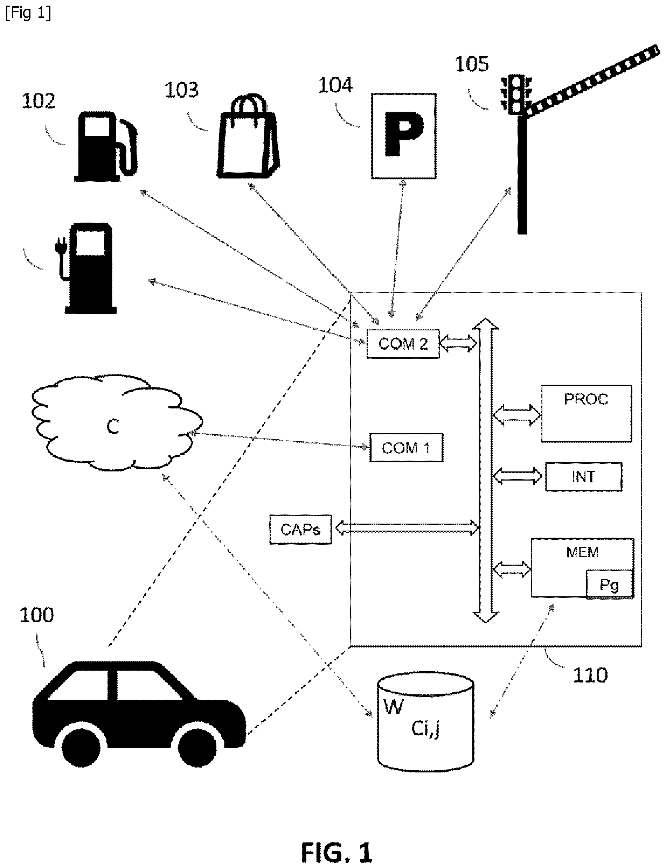

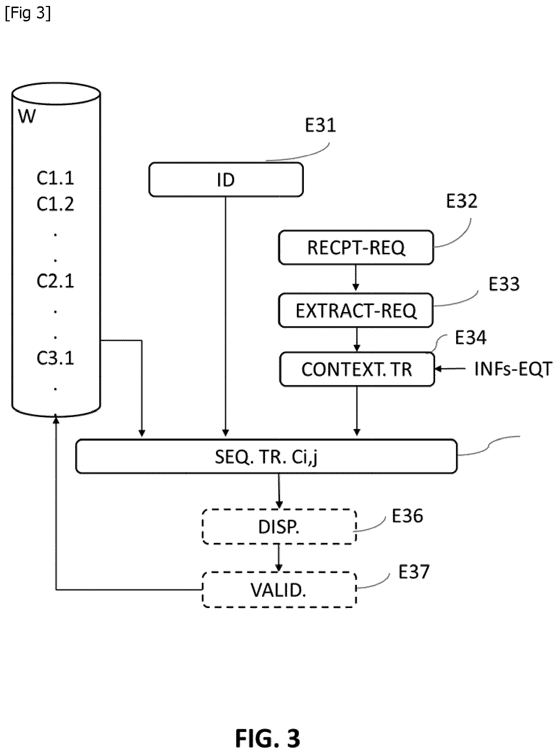

La figure 1 illustre un premier exemple d'application de l'invention. Dans cet exemple, un équipement connecté partagé est un véhicule représenté en 100 sur la figure. Ce véhicule comporte un système informatique (110) comportant notamment un module de contrôle comprenant un processeur (PROC) configuré pour exécuter des instructions d'un ou de plusieurs programmes informatiques (Pg) enregistrés dans une mémoire (MEM) du système informatique. Un tel programme informatique comporte des instructions pour l'exécution des étapes du procédé de gestion du portefeuille électronique tel que décrit ultérieurement en référence à la figure 3. Ce module de contrôle est apte à gérer les différents services proposés au conducteur ou à ses passagers comme par exemple la navigation en utilisant des outils de localisation de type GPS (pour « Global Positioning System » en anglais), une gestion multimédia permettant d'écouter de la musique, la radio ou encore une gestion des communications via des terminaux mobiles présents dans le véhicule. Ce système 110 comporte une interface utilisateur (INT) qui peut par exemple être sous la forme d'un écran tactile disposé sur le tableau de bord du véhicule, l'interface peut également prévoir une reconnaissance vocale pour que les occupants du véhicule puissent interagir avec le système informatique du véhicule. Le système informatique peut comporter ou interagir avec des capteurs prévus dans le véhicule (CAPs) comme par exemple des caméras permettant de visualiser l'environnement immédiat du véhicule devant ou derrière, des capteurs de vitesse, de détection du niveau de la batterie pour un véhicule électrique ou du niveau de carburant, des capteurs de reconnaissances de présence dans le véhicule, des capteurs biométriques permettant l'identification des personnes du véhicule, etc...

La liste n'est pas exhaustive, bien d'autres capteurs peuvent être intégrés dans le véhicule décrit ici.

Le système informatique comporte également un module de communication (COM2) par exemple de type radio sans fil courte ou moyenne portée tel que Bluetooth, WiFi, DSRC (pour « Dedicated Short Range Communications » en anglais), C-V2X, et un module de communication (COM 1) de type cellulaire 4G ou 5G.

Le système informatique du véhicule comporte une carte SIM ou eSIM dans une mémoire dédiée et sécurisée afin de mettre en œuvre les communications entre le véhicule et différents dispositifs de communications via les modules de communication sus-décrits. Cette carte SIM ou eSIM permet d'obtenir un identifiant unique pour le véhicule lors de ces communications.

Le module de communication sans fil courte ou moyenne portée (COM 2) est adapté pour envoyer et recevoir des messages de transactions avec différents dispositifs de fournitures de biens ou de services situés à proximité du véhicule. Quelques exemples de distributeurs de tels biens ou services sont illustrés à la figure 1. Il peut s'agir par exemple de services de recharge électrique du véhicule (101), de fourniture en carburant (102) ou bien d'achat de restauration ou d'alimentation de type « Drive » (103) ou encore de services de parking (104) ou de péages (105). Bien d'autres fournitures de biens ou de services peuvent bien sûr être envisagées ici.

Pour effectuer des transactions avec ces distributeurs ou fournisseurs de services, le système informatique du véhicule utilise un portefeuille électronique (« e-wallet » en anglais), que l'on peut appeler aussi portefeuille numérique, dans lequel sont enregistrées plusieurs cartes virtuelles de transactions. Par carte virtuelle de transaction, on entend tout type de carte de paiement, de jeton numérique (« token » en anglais) attaché à une carte bancaire, de bons d'achat, d'ordre de prélèvement à un compte bancaire, de tickets prépayés ou tout autre moyen de transaction virtualisé. Ce portefeuille électronique peut être enregistré tout ou en partie dans la mémoire MEM du système informatique du véhicule ou bien il peut être enregistré dans des serveurs réseau de type nuage (« cloud » en anglais) (C) et accessible par le système informatique du véhicule via le module de communication (COM 1) du système informatique.

Selon un mode de réalisation de l'invention, ce portefeuille électronique peut comporter plusieurs cartes virtuelles de transaction pour un même utilisateur. Il peut également comporter différentes cartes virtuelles pour différents utilisateurs du véhicule.

Ces cartes virtuelles enregistrées dans ce portefeuille électronique sont associées à des caractéristiques propres à chacune des cartes virtuelles comme des caractéristiques de catégories d'achat, de plafond autorisé, des caractéristiques de restrictions de droits d'utilisation, de restriction géographique, de restriction temporelle, de mode de validation ou bien d'autres caractéristiques d'utilisation.

L'utilisation de ces différentes caractéristiques sera décrite ultérieurement en référence à la figure 3.

Le procédé décrit ultérieurement et illustré à la figure 3 est, dans l'exemple de réalisation de la figure 1, mis en œuvre par le processeur du système informatique du véhicule lors d'une transaction effectuée vers un fournisseur de biens ou de services tels qu'illustré sur cette figure.

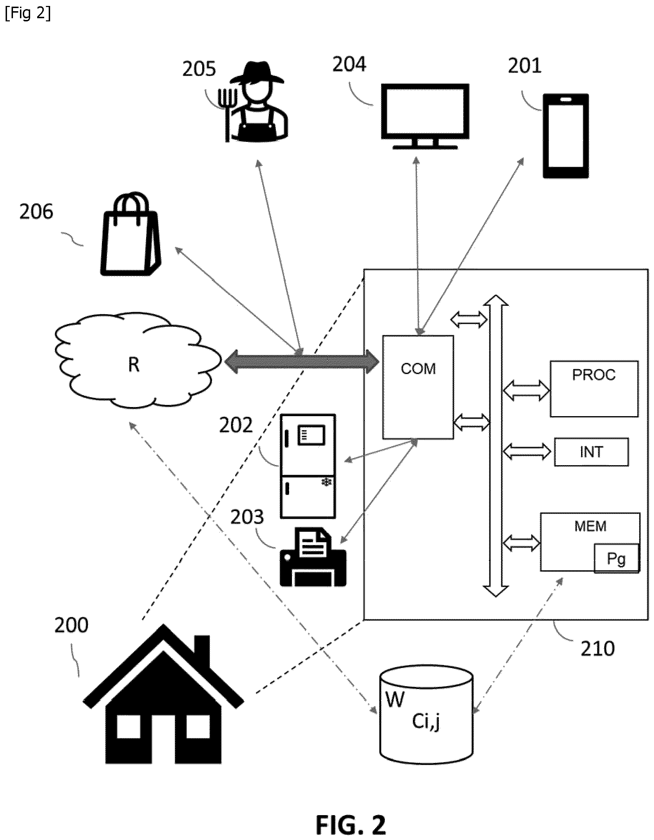

Une deuxième application possible de l'invention est illustrée à la figure 2. Le contexte d'application est ici une habitation partagée et connectée (200), dans laquelle un réseau local est prévu pour permettre des communications entre les équipements de la maison et un dispositif de gestion (210) apte à gérer le réseau local. Un tel dispositif de gestion (210) est par exemple une passerelle domestique comportant un module de communication (COM) comprenant des fonctions de communication sans fil courte ou moyenne portée de type Wi-Fi, Bluetooth ou Zigbee pour communiquer avec les équipements ou terminaux du réseau local. Ces équipements sont par exemple illustrés sur la figure 2 et sont de type terminal mobile (201), réfrigérateur connecté (202) ou bien imprimante (203). Bien d'autres équipements ou dispositifs dans l'habitation peuvent bien sûr être prévus, le module de communication sans fil du dispositif de gestion 210 pouvant échanger des messages avec les équipements de l'habitation et ainsi permettre un contrôle des fonctionnalités de ces équipements. Le dispositif de gestion comporte également un module de contrôle comprenant un processeur (PROC) configuré pour exécuter des instructions d'un ou de plusieurs programmes informatiques (Pg) enregistrés dans une mémoire (MEM). Un tel programme informatique comporte des instructions pour l'exécution des étapes du procédé de gestion du portefeuille électronique tel que décrit ultérieurement en référence à la figure 3.

Le dispositif de gestion peut aussi dans un mode de réalisation être intégré dans un terminal de type ordinateur ou téléphone intelligent (smartphone en anglais).

Le module de communication (COM) du dispositif de gestion comporte également une interface de communication vers un réseau externe (R) par exemple de type filaire Ethernet ou bien de type sans fil longue portée 4G ou 5G.

Le dispositif de gestion peut ainsi enregistrer ou récupérer des informations sur des serveurs du réseau R de type « nuage » (Cloud en anglais).

Une interface utilisateur (INT) peut être prévue soit sur le dispositif de gestion soit de façon déportée, par exemple sur un écran situé à l'entrée de l'habitation et accessible par tous les occupants. Une interface déjà existante dans l'habitation, comme par exemple un téléviseur, peut également être utilisée pour interagir avec le dispositif de gestion. De même, le dispositif de gestion peut être piloté par une application de gestion dédiée accessible via les terminaux des occupants de l'habitation.

Des informations dédiées au fonctionnement de l'habitation sont enregistrées dans une mémoire MEM du dispositif de gestion ou dans une mémoire d'un serveur du réseau R. Parmi ces informations, se trouve un portefeuille électronique (« e-wallet » en anglais) dans lequel sont enregistrées plusieurs cartes virtuelles de transactions. Par carte virtuelle de transaction, on entend tout type de carte de paiement, de jeton numérique (« token » en anglais) attaché à une carte bancaire, de bons d'achat, d'ordre de prélèvement à un compte bancaire, de tickets prépayés ou tout autre moyen de transaction.

Selon un mode de réalisation de l'invention, ce portefeuille électronique peut comporter plusieurs cartes virtuelles de transaction pour un même occupant de l'habitation. Il peut également comporter différentes cartes virtuelles pour différents occupants.

Ces cartes virtuelles enregistrées dans ce portefeuille électronique sont associées à des caractéristiques propres à chacune des cartes virtuelles comme des caractéristiques de catégories d'achat, de plafond autorisé, des caractéristiques de droits d'utilisation, de restriction temporelle ou bien d'autres caractéristiques d'utilisation.

L'utilisation de ces différentes caractéristiques sera décrite ultérieurement en référence à la figure 3.

Le procédé décrit ultérieurement et illustré à la figure 3 est, dans l'exemple de réalisation de la figure 2, mis en œuvre par le processeur du dispositif de gestion de l'habitation lors d'une transaction effectuée vers un fournisseur de biens ou de services tels qu'illustré sur cette figure.

Les transactions possibles avec l'équipement connecté et partagé de type habitation sont par exemple des transactions pour obtenir des services multimédias (204) de type vidéo à la demande, jeux, accès à des services de diffusion de flux (streaming en anglais) ou tout autre obtention de contenu multimédia visualisable sur une télévision, un ordinateur, tablette ou mobile. Les transactions pour la fourniture de tels services multimédias peuvent être effectuées ponctuellement ou par abonnement. De tels services peuvent concerner un seul ou plusieurs occupants de la maison. Le paiement d'un tel service doit donc être adapté aux personnes intéressées.

Un autre type de transaction peut être par exemple des commandes de fournitures diverses (206) pour les occupants de la maison comme des achats d'alimentation ou des demandes de livraison de repas. Certaines commandes peuvent être déclenchées automatiquement par un réfrigérateur connecté (202) qui fait l'inventaire de son contenu et commande certains aliments dès que la quantité est insuffisante. Il peut s'agir de fournitures de type cartouche d'encre ou papier pour une imprimante. Là encore, les capteurs de l'imprimante (203) peuvent envoyer l'information de commande de ces fournitures, au dispositif de gestion de la maison, quand cela est nécessaire.

D'autres transactions peuvent être prévues comme par exemple des commandes à des services de jardinage (205) ou de ménage dont les frais sont à partager entre les occupants de la maison.

Bien d'autres fournitures de biens ou de services peuvent bien sûr être envisagées ici.

On décrit à présent, les étapes mises en œuvre par le procédé de gestion d'un portefeuille électronique selon un mode de réalisation de l'invention. Ces étapes sont illustrées sous forme d'organigramme à la figure 3.

Lors d'une étape E31, une identification des utilisateurs de l'équipement connecté partagé est effectuée. Les identifiants des utilisateurs de l'équipement sont, dans un mode de réalisation, préalablement enregistrés dans une mémoire du système informatique de l'équipement connecté, par exemple dans le portefeuille numérique de l'équipement. L'étape d'identification consiste alors en une lecture des identifiants ainsi enregistrées.

Dans un mode de réalisation particulier, une identification des personnes présentes dans l'équipement connecté partagé est réalisée.

Dans le cas d'un équipement tel qu'un véhicule connecté, cette étape d'identification peut s'effectuer par des capteurs de présence prévus dans les véhicules et qui détectent combien de personnes sont assises dans le véhicule. Ce type de détection permet de savoir le nombre de personnes présentes. Des capteurs biométriques peuvent être intégrés au véhicule pour permettre d'identifier les personnes présentes. Il peut s'agir par exemple de caméras prévues dans le véhicule et qui mettent en œuvre une reconnaissance faciale des occupants du véhicule ou encore des lecteurs d'empreintes digitales prévus dans le véhicule. L'identification peut aussi être effectuée via une détection des mobiles présents dans le véhicule, les mobiles étant associées aux personnes présentes dans le véhicule. Cette détection est par exemple effectuée par le système informatique du véhicule qui effectue une recherche d'équipement Bluetooth présents dans l'habitacle. Cette détection corrélée à la détection de personnes présentes dans le véhicule permet de savoir si toutes les personnes présentes ont été identifiées. D'autres moyens d'identification de personnes peuvent être prévus dans le véhicule. Ces moyens étant connus, ils ne seront pas détaillés ici.

Dans un mode de réalisation particulier, le propriétaire ou le gestionnaire du véhicule est identifié par défaut dans le système informatique du véhicule, même s'il n'est pas présent dans le véhicule. Ainsi, les moyens de transaction de ce propriétaire peuvent être utilisés pour certaines transactions et selon des conditions prédéterminées.

Dans le cas d'un équipement connecté tel qu'une habitation, dans un mode de réalisation particulier, une identification des personnes présentes dans l'habitation est effectuée. Cette étape d'identification des personnes présentes dans l'habitation peut être réalisée par des capteurs biométriques prévus dans la maison et qui sont actionnés dès qu'une personne entre dans l'habitation comme par exemple une caméra à l'entrée de l'habitation. La détection des mobiles associés aux personnes peut aussi être effectuée soit par la recherche d'équipements Wi-Fi ou d'équipements Bluetooth au sein de la maison et identifiés au préalable par le dispositif de gestion de l'habitation. L'identification des occupants habituels de la maison peut être également enregistrée par défaut dans le dispositif de gestion de la maison pour ainsi pouvoir utiliser certains moyens de transaction des occupants même s'ils ne sont pas présents dans l'habitation et selon des conditions prédéterminées.

A l'étape E32, le module de communication de l'équipement partagé connecté reçoit une requête de transaction pour la fourniture d'un bien ou d'un service, par un dispositif de fourniture d'un tel bien ou service. Cette requête est reçue pour donner suite à l'initialisation d'une transaction, par exemple lors de la recharge d'un véhicule dans le contexte de la figure 1, de son passage au péage ou bien lors d'une commande d'un repas à un service drive.

L'initialisation d'une transaction est par exemple mise en œuvre lorsque le véhicule s'approche d'une borne de péage, un canal de communication étant alors établi de façon sécurisée pour effectuer une transaction sans contact entre la borne et le système informatique du véhicule. De même, lorsque l'utilisateur du véhicule branche son véhicule à une borne de recharge, un canal de communication sécurisé est établi pour qu'un paiement sans contact puisse être effectué lorsque l'utilisateur aura effectué la recharge de son véhicule. L'établissement d'un tel canal de communication ou d'appairage pour une transaction sans contact est classique et ne sera pas plus détaillé ici. Dans un mode particulier de réalisation, l'établissement d'un tel canal de communication est exécuté de manière autonome par le véhicule connecté comme décrit dans le document FR2106702 incorporé à titre de référence à la présente description.

Pour le cas d'une maison connectée illustré à la figure 2, la requête de transaction reçue du dispositif de fourniture de services ou de produits peut être une requête de paiement du fournisseur de produits d'alimentation pour donner suite à une commande effectuée par un des occupants de l'habitation via son mobile par exemple et une application dédiée à la gestion de l'habitation et utilisant le portefeuille électronique associé à l'habitation. Cette commande peut aussi être effectuée de façon automatique par le réfrigérateur connecté. Une requête de transaction peut être également une demande de paiement d'un abonnement au service de streaming en provenance d'un serveur de gestion de ce service suite à l'activation du service par un des occupants de l'habitation ou bien de façon automatique pour renouveler un abonnement par exemple. Bien d'autres commandes et bien d'autres demandes de paiement à honorer au sein d'une habitation peuvent être effectuées.

La requête de transaction reçue du dispositif de fourniture de services ou de produits est par exemple une requête de paiement de type SEPA RTP (pour « Single Euro Payments Area Request to Pay » en anglais) ou une requête de type Paypal^{®} ou tout autre type de requête de paiement.

Cette requête de transaction comporte certaines informations concernant la transaction en cours, par exemple, le montant de la transaction, la catégorisation des achats ou du service rendu, le contenu ou la quantité des biens fournis ou bien encore le nom du fournisseur du service ou du bien, la date, etc...

A l'étape E33, une extraction d'au moins une partie de ces informations présentes dans la requête de transaction est réalisée.

En fonction de ces informations extraites et aussi d'informations propres à l'équipement connecté partagé (INFs-EQT), une étape de détermination d'un contexte de transaction est effectuée en E34.

Dans le cas d'un équipement de type véhicule, certaines informations connues du système informatique du véhicule sont utilisées. Il peut s'agir par exemple d'informations comme la localisation du véhicule via le système GPS du véhicule, l'heure, la date ou encore la vitesse du véhicule.

Dans le cas d'un équipement de type habitation, des informations connues du dispositif de gestion de l'habitation sont utilisées. Ces informations sont par exemple de type date, heure, message d'alerte sur le niveau de consommation de fourniture d'appareils comme le réfrigérateur, l'imprimante, les dates d'échéances d'abonnements pris envers certains fournisseurs de services, etc...

Une analyse des données ainsi collectées permet de déterminer un contexte de transaction. En effet, dans l'exemple d'application du véhicule, l'information extraite de la requête de transaction sur le nom du marchand (par exemple fournisseur d'électricité pour véhicule F1), les informations issues du système informatique du véhicule comme le niveau de recharge du véhicule, la date et l'heure, permettent par exemple de déterminer qu'une transaction pour la recharge électrique du véhicule est en cours un dimanche à 17h chez le fournisseur F1.

L'information extraite de la requête de transaction pourrait être dans un autre exemple, le nom d'un fournisseur de repas à emporter, le montant de la transaction et l'adresse du fournisseur. Les informations issues du système informatique du véhicule sont par exemple, la localisation du véhicule, le fait que celui-ci roule à une vitesse V et l'heure. Ainsi, l'analyse de ces données permet de déterminer que la transaction concerne un achat de repas à emporter chez un fournisseur situé à 1h de trajet et que le véhicule est en route et donc en mouvement vers ce fournisseur.

De la même façon, dans l'exemple d'application d'une habitation, à partir de données extraites de la requête de transaction comme par exemple le nom du fournisseur de service (livreur de pizza P1), le nombre de pizzas commandées et le montant et à partir des données issues du dispositif de gestion de l'habitation comme la date et l'heure, le contexte de transaction peut être déterminé. L'analyse de ces données permet de déterminer que la transaction concerne une livraison de 2 pizzas, pour un prix de 30€, commandées chez le fournisseur P1, le mardi 23 Novembre à 20h.

Dans un autre exemple de transaction pour une habitation, une commande de cartouches d'encre est par exemple initiée chez un fournisseur de cartouches d'encre. Les données extraites de la requête de transaction sont par exemple, le montant de la commande, le nombre de cartouches, la date et le nom du fournisseur E. Les informations fournies par le dispositif de gestion de l'habitation sont, par exemple, la date, l'heure et le message d'alerte envoyée par l'imprimante connectée qui a détecté un manque de produits. L'analyse de ces données permet de déterminer que la transaction concerne une commande de cartouches d'encre chez le fournisseur E et que la commande a été initiée par un message d'alerte de l'imprimante.

Ces informations de contexte ainsi que les informations d'identification des utilisateurs de l'équipement partagé permettent, dans un mode de réalisation, de déterminer, à partir des cartes virtuelles de transaction enregistrées dans le portefeuille électronique, au moins une séquence d'utilisation de ces cartes pour honorer la requête de transaction reçue.

Cette étape de détermination d'une séquence d'utilisation d'au moins deux cartes virtuelles de transaction est effectuée en E35 par analyse de caractéristiques associées aux cartes virtuelles de transaction du portefeuille électronique et/ou en fonction de l'identification des utilisateurs de l'équipement partagé. Dans un mode de réalisation, le contexte de transaction déterminé aide à la détermination de la séquence.

Dans le portefeuille électronique W sont enregistrées une pluralité de cartes virtuelles de transaction. Par carte virtuelle de transaction, on entend tout type de moyen de paiement, de jeton numérique (« token » en anglais) attaché à une carte bancaire, de bons d'achat, d'ordre de prélèvement à un compte bancaire, de tickets prépayés ou tout autre moyen de transaction. Ces cartes virtuelles de transaction ont été enregistrées au préalable par le ou les utilisateurs de l'équipement connecté en association avec l'identité de l'utilisateur. L'utilisateur enregistre pour cela les identifiants représentatifs de la carte qui vont permettre de récupérer soit auprès d'un service bancaire associé ou bien auprès de l'organisme de gestion de la carte ou du bon d'achat, le jeton numérique (token) ou les caractéristiques de paiement ou de crédits nécessaires au paiement de service ou de bien. Ces échanges auprès des services bancaires ou autres organismes de gestion de cartes virtuelles de transaction s'effectuent classiquement par un réseau de communication et via des moyens de communication dédiés sur l'équipement ou sur un autre terminal de l'utilisateur. Ils ne seront pas plus détaillés ici.

Ces cartes virtuelles de transaction enregistrées dans le portefeuille électronique sont associées à des caractéristiques qui leur sont propres. Ces caractéristiques sont par exemple des caractéristiques de catégorisation d'utilisation de cette carte (comme des cartes restaurant, des cartes de recharge électrique), d'enseigne d'utilisation (marque de fournisseur de carburant, enseigne de restauration, ...), de plafond de paiement autorisé, de droit associé d'utilisation (délégation à telle ou telle personne, usage à titre professionnel uniquement), de mode de validation (code à entrer, message vocal ou aucune validation nécessaire), etc...

En plus de ces caractéristiques associées, enregistrées sous forme de métadonnées associées aux identifiants de la carte, l'utilisateur peut également entrer ses propres caractéristiques d'utilisation de la carte. Par exemple, il peut spécifier qu'une telle carte est à utiliser seulement en semaine et une autre seulement le week-end, il peut spécifier qu'une telle carte peut être utilisée par telle ou telle personne et pour un montant maximum associé. Il peut également associer une catégorie d'achat aux cartes qu'il enregistre.

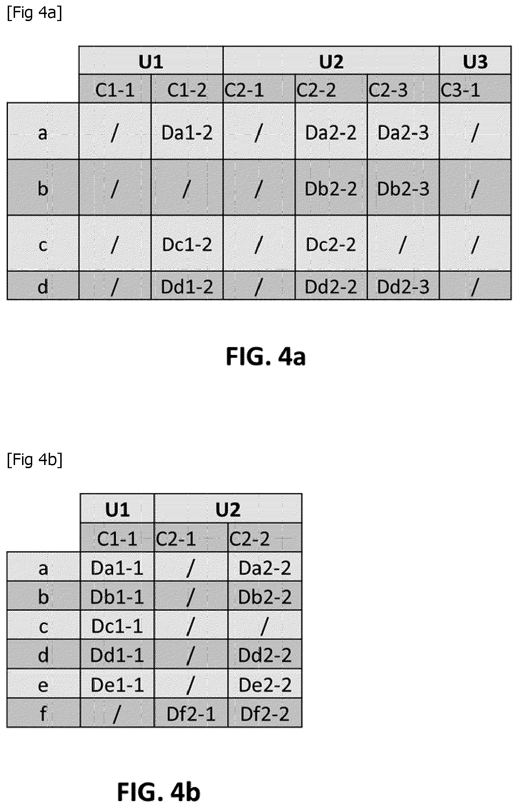

L'enregistrement de ces caractéristiques est illustré aux figures 4a et 4b sous forme de tables. A la figure 4a, la table répertorie pour les utilisateurs U1, U2 ou U3, les cartes virtuelles de transaction C1-1 et C1-2 pour U1, C2-1, C2-2 et C2-3 pour U2 et C3-1 pour U3.

A chaque carte sont ensuite répertoriées des caractéristiques associées a, b, c, d, comme par exemple la catégorie du service ou du bien (a) (par exemple, alimentation, restaurant, essence, recharge électrique, péage, fourniture de bureau, etc...) définie par une donnée (Da) indiquant les catégories possibles pour cette carte, dans le cas où la carte en question est dédiée à une ou plusieurs catégories (Da1-2 pour la carte C1-2). Certaines cartes peuvent ne pas avoir de catégorie associée, dans ce cas, tout type de catégorie est autorisé, ce qui est illustré par le fait qu'aucune donnée n'est associée à cette ligne. Une donnée spécifiant que toute catégorie est autorisée peut aussi être renseignée dans une variante de réalisation.

Une autre caractéristique est par exemple une caractéristique de plafond d'un montant possible pour cette carte (b), la valeur de ce plafond est alors définie par une donnée associée le cas échéant (Db2-2 pour la carte C2-2). Là aussi, certaines cartes n'ont pas de plafond associé.

Une caractéristique (c) de type « droit d'utilisation » de la carte peut également être répertoriée avec une donnée associée (Dc1-2 pour la carte C1-2) qui peut correspondre à une restriction d'utilisation conditionnée à la présence de U1 dans l'équipement.

Enfin, une caractéristique (d) liée à l'agenda peut être répertoriée et peut être définie par une donnée (Dd) d'utilisation de la carte selon par exemple certains jours de la semaine, ou horaires du jour ou bien certaines périodes de l'année. Là aussi, cette caractéristique peut ne pas être définie pour toutes les cartes.

La figure 4b illustre une autre table enregistrant une carte C1-1 pour l'utilisateur U1 et deux cartes C2-1 et C2-2 pour l'utilisateur U2. Les caractéristiques a, b, c, d, e et f répertoriées ici sont par exemple pour a, b, c, d, les mêmes que celles décrites pour la figure 4a. Les données associées Da1-1, Db1-1, Dc1-1 et Dd1-1 sont enregistrées pour la carte C1-1 et les données Da2-2, Db2-2, Dd2-2 sont enregistrées pour la carte C2-2. Une autre caractéristique (e) est ici prévue. Elle concerne par exemple la situation géographique. La donnée associée à cette caractéristique pour la carte C1-1 est par exemple une donnée indiquant que cette carte ne fonctionne qu'en France (De1-1), pour la carte C2-2, cette donnée (De2-2) peut être une donnée indiquant un fonctionnement en Europe.

Une autre caractéristique (f) est ici par exemple une caractéristique de mode de validation de la carte. Par exemple, la donnée Df2-1 associée à la carte C2-1 peut être une validation par un message vocal et la données Df2-2 peut être une validation par un code. La carte C1-1 n'a pas de donnée de validation, ce qui signifie ici qu'il n'y a pas d'étape de validation pour cette carte.

Ces listes de caractéristiques ne sont pas exhaustives. D'autres caractéristiques d'utilisation de ces cartes peuvent bien sûr être répertoriées de la même façon. De même le nombre d'utilisateurs enregistrés et le nombre de cartes peuvent bien entendu être différents. Ces données peuvent être enregistrées sous forme de table comme illustré aux figures 4a et 4b mais peuvent bien sûr être enregistrées sous différentes formes, par exemple sous la forme d'arborescence ou bien sous une forme de liste.

A l'étape E35 illustrée à la figure 3, il est déterminé au moins une séquence d'utilisation d'au moins une carte virtuelle de transaction du portefeuille électronique de transaction par analyse de caractéristiques associées aux cartes virtuelles de transaction du portefeuille électronique, du contexte de transaction déterminé et de l'identification du au moins un utilisateur de l'équipement partagé.

Dans un cas d'application illustré à la figure 1, sur un équipement de type véhicule connecté, on se place pour un premier exemple, dans la situation où trois personnes sont dans le véhicule. Ces trois personnes ont des cartes virtuelles de transaction enregistrées dans le portefeuille électronique associé au véhicule, comme par exemple illustré à la figure 4a. Ces trois personnes ont été identifiées à l'étape E31. Pour cet exemple, une transaction est en cours pour commander un repas à emporter chez un fournisseur spécifique nommé R1. Les données concernant cette transaction ont été extraites de la requête de transaction à l'étape E33 (montant, fournisseur, catégorie), et le contexte de transaction a été défini en E34 avec les informations additionnelles provenant du système informatique du véhicule (par exemple l'heure). La transaction est déterminée comme étant une transaction chez le fournisseur R1, la catégorie d'achat est de type restauration, pour un montant de 30€, un dimanche à 20h. Afin de déterminer une règle de transaction adaptée à cette transaction spécifique, les caractéristiques des cartes virtuelles sont analysées en E35. Une mise en correspondance entre les données de caractéristiques des cartes de transaction et les données de contexte de transaction déterminées et/ou les listes de personnes présentes est effectuée. Lorsqu'une ou plusieurs correspondances sont trouvées, les cartes concernées sont sélectionnées pour déterminer une séquence adaptée à la transaction correspondant à la requête reçue.

Ces caractéristiques montrent que la carte C1-2 de l'utilisateur U1 ne peut être utilisée que les jours de la semaine (donnée Dd1-2=du lundi au vendredi) et pour une catégorie (Da1-2=Recharge électrique, péage et parking) différente de celle de la transaction en cours. Cette carte ne peut donc pas être utilisée pour cette transaction. La carte C1-1, en revanche, peut être utilisée pour tout type de catégorie, sans restriction de droits et à n'importe quel moment (pas de donnée associée pour la catégorie d). Elle peut donc être utilisée. De même, les cartes C2-1 et C3-1 peuvent être utilisées pour tout type de catégorie et à n'importe quel moment. Elles peuvent donc également être utilisées pour cette transaction.

La carte C2-2 concerne une carte restaurant (Da2-2=restauration, alimentation) avec un plafond de 19€ (Db2-2=19€) mais qui ne peut pas être utilisée le dimanche (Dd2-2=tous les jours de la semaine sauf le dimanche et jours fériés), elle ne peut donc pas être utilisée ici.

La carte C2-3 est un bon d'achat chez le fournisseur R1 (Da2-3=fournisseur R1) pour un montant de 10€ (Db2-3=10€) et avec une date limite d'utilisation (Dd2-3=jusqu'au 31/12/2021) postérieure à la date de la transaction en cours. Elle peut donc être utilisée pour cette transaction.

Ainsi, plusieurs séquences d'utilisation des cartes virtuelles, que l'on peut encore appeler séquences de transaction, peuvent être déterminées. Une première séquence de transaction peut être par exemple d'utiliser uniquement la carte C1-1. Une deuxième séquence de transaction peut être d'utiliser la carte C2-3 pour un montant de 10€ puis d'utiliser la carte C1-1. Une 3^{ième} séquence de transaction peut être d'utiliser les cartes C1-1, C2-1 et C3-1 pour un montant correspondant au montant de la transaction divisé par 3 (ici 30€/3=10€). Une 4^{ième} séquence de transaction peut aussi être d'utiliser la carte C2-3 pour un montant de 10€ puis d'utiliser les cartes C1-1 et C2-1 avec un montant correspondant au reste du montant de la transaction, divisé par 2 (ici (30€-10€)/2=10€).

Dans un mode de réalisation, ces différentes séquences de transaction sont proposées aux utilisateurs de l'équipement à l'étape E36 de la figure 3, par exemple par affichage sur le tableau de bord du véhicule, ou bien par proposition vocalisée, afin qu'ils puissent valider leur choix préféré. L'affichage prévoit ainsi une interface de validation ou de non-validation de la détermination proposée, par interaction tactile ou vocale. Ainsi, selon le choix sélectionné par les occupants du véhicule, le système informatique enregistre cette information de validation dans le portefeuille électronique pour enrichir les informations associées aux cartes virtuelles. Des règles de transaction impliquant une ou plusieurs cartes virtuelles du portefeuille électronique peuvent ainsi être enregistrées en plus des données liées aux caractéristiques des cartes. Un apprentissage est ainsi effectué au fil du temps et en fonction de l'usage répété des mêmes validations pour des situations similaires. Par exemple, si le choix de la 4ième séquence est validé, alors le système informatique apprend que dans le cas où les utilisateurs 1, 2 et 3 sont dans le véhicule et pour une dépense de restauration, ce sont les cartes des utilisateurs 1 et 2 qui sont utilisées.

Cet apprentissage est par exemple réalisé en appliquant une pondération aux séquences déterminées. Plus la valeur de la pondération est importante et plus la séquence est à prioriser. Ainsi, lorsqu'une séquence est validée par l'utilisateur, le poids associé à cette séquence est augmenté. La séquence pondérée est ainsi enregistrée comme une règle de transaction. Ces règles de transaction sont enregistrées en complément des données liées aux caractéristiques des cartes virtuelles afin de réduire le nombre de propositions de séquences de transaction déterminées par le système pour les transactions suivantes. Ces règles de transaction peuvent donc être apprises mais peuvent aussi être renseignées par les utilisateurs, par exemple lors de l'enregistrement des cartes virtuelles dans le portefeuille électronique. Ces règles apprises ou renseignées peuvent par exemple être des règles de priorisation d'utilisation de certaines cartes selon la catégorisation de la transaction (par exemple prioriser des bons d'achat ou la carte restaurant avant toute autre carte pour des transactions alimentaires), selon les personnes présentes dans le véhicule ou l'équipement (par exemple si U1 et U2 présents : prioriser les cartes de U1). Ainsi, la détermination des séquences de transaction prend également en compte ces règles de transaction apprises ou renseignées dans le portefeuille électronique associé au véhicule.

Dans un deuxième exemple d'application dans un véhicule, une transaction peut être une recharge électrique du véhicule. Les informations extraites de la requête de transaction en E33 sont par exemple le nom du fournisseur d'électricité pour véhicule F1, le montant de la transaction, les informations issues du système informatique du véhicule sont par exemple le niveau de recharge du véhicule qui est à 100% à la fin de la recharge, la date et l'heure. Ces informations permettent de déterminer que la transaction est une transaction pour la recharge électrique du véhicule, un dimanche à 17h chez le fournisseur F1.

Afin de déterminer une règle de transaction adaptée à cette transaction spécifique, les caractéristiques des cartes virtuelles sont analysées en E35. Une mise en correspondance entre les données de caractéristiques des cartes de transaction et les données de contexte de transaction déterminées et/ou les listes de personnes présentes est effectuée. Lorsqu'une ou plusieurs correspondances sont trouvées, les cartes concernées sont sélectionnées pour déterminer une séquence adaptée à la transaction correspondant à la requête reçue.

Ainsi, dans cet exemple, la catégorie de la transaction permet d'écarter les cartes C2-2, C2-3 dont les données associées à la caractéristique de catégorie « a », ne correspondent pas à la catégorie recharge électrique. De même, la donnée de transaction « dimanche 17h » ne correspond pas à la donnée de la caractéristique d'agenda de la carte C1-2 (Dd1-2=du lundi au vendredi). Ainsi, seules les cartes C1-1, C2-2 et C3-1 peuvent être utilisées. Une séquence d'utilisation de ces cartes est par exemple l'utilisation des 3 cartes avec un montant réparti sur ces trois cartes. Une autre séquence est de n'utiliser que les cartes de U1 et U2 avec un montant réparti ou encore l'utilisation d'une seule carte, de U1 ou de U2 ou de U3.

Une règle de transaction préalablement enregistrée soit par les utilisateurs soit après une phase d'apprentissage de l'usage de ces cartes du portefeuille électronique, donne la priorité sur l'utilisation par exemple de la carte C1-1 pour la catégorie « recharge électrique » même en présence des utilisateurs U1 et U3. Dans ce cas, une seule séquence est proposée sur l'interface du véhicule pour validation, celle qui propose l'utilisation de la carte C1-1 pour cette transaction. En effet, dans le cas où une pondération est appliquée aux séquences enregistrées dans les règles de transactions, un mode de réalisation est de n'afficher que la séquence qui possède le poids le plus élevé. Dans une variante de réalisation, la différence de poids entre deux séquences peut être calculées et une comparaison à un seuil est effectuée. Dans cette variante, seule la séquence ayant une différence de poids supérieur au seuil est proposée. Si la différence de poids n'est pas assez significative, alors les deux séquences sont proposées à l'utilisateur.

Dans un troisième exemple, on se place dans un cas où le véhicule est un véhicule de location. Le portefeuille électronique, dans cet exemple, est illustré à la figure 4b. Ce portefeuille électronique associé au véhicule comprend par défaut une carte virtuelle de transaction (C1-1) associée au loueur du véhicule (U1). Cette carte est associée à des caractéristiques, par exemple de catégories de transaction possibles (Da1-1= Essence, péage), de plafond (Db1-1=50€), de droits d'utilisation (Dc1-1= droit pour U2 pendant la période de location), la période de location étant définie par la donnée (Dd1-1) associée à la caractéristique d'agenda d. Une autre caractéristique de situation géographique (e) peut également être prévue. Une donnée De1-1 de pays d'utilisation de la carte étant alors renseignée.

Enfin, une caractéristique de mode de validation (f) est également prévue. Une donnée Df2-1 associée à la carte C2-1 indiquant qu'une validation orale doit être faite et une donnée Df2-2 associée à la carte C2-2 indiquant qu'une validation par l'entrée d'un code est nécessaire.

Les caractéristiques de la carte C1-1 sont paramétrables par le loueur de véhicule selon le contrat de location prévu et pris pour ce véhicule.

Le locataire du véhicule enregistre ces cartes de transaction dans le portefeuille électronique associé au véhicule afin de pouvoir régler facilement les dépenses qu'il peut avoir avec ce véhicule pendant la location. Ses cartes seront enlevées du portefeuille électronique après la location, soit par lui-même, soit de façon automatique dès la fin de la location. Ainsi, dans l'exemple illustré ici en référence à la figure 4b, le locataire a enregistré 2 cartes virtuelles, sa carte de paiement usuelle (C2-1) applicable pour tout type de transaction et une carte de restaurant (C2-2) associée à des données de catégorie (Da2-2=restauration, alimentation), de plafond (Db2-2=19€), d'agenda (Dd2-2=tous les jours sauf le dimanche et jours fériés), de localisation De2-2= uniquement en Europe) et de mode de validation (Df2-2=par code).

Ainsi, lors d'un passage à une station d'essence par le locataire de la voiture, les données concernant cette transaction ont été extraites de la requête de transaction à l'étape E33 (par exemple le montant de la transaction et le nom du fournisseur), et le contexte de transaction a été défini en E34 avec les données en provenance du véhicule (date, heure, localisation). Le contexte de transaction est alors défini comme étant de type fourniture d'essence, pour un montant de 60€, en France et chez le fournisseur E1, le lundi 29 Novembre à 12h. Afin de déterminer une règle de transaction adaptée à cette transaction spécifique, les caractéristiques des cartes virtuelles sont analysées en prenant en compte les caractéristiques décrites à la figure 4b. Une mise en correspondance entre les données de caractéristiques des cartes de transaction et les données de contexte de transaction déterminées et/ou les listes de personnes présentes est effectuée. Lorsqu'une ou plusieurs correspondances sont trouvées, les cartes concernées sont sélectionnées pour déterminer une séquence adaptée à la transaction correspondant à la requête reçue.

Ainsi, pour ce contexte de transaction, l'analyse des caractéristiques des cartes de transaction enregistrées dans le portefeuille électronique montre que la carte C1-1 du loueur peut être utilisée pour ce type d'achat et dans ce pays mais seulement pour un montant de 50€, que la carte C2-2 du locataire U2 ne peut pas être utilisée parce qu'elle ne concerne pas cette catégorie de transaction. La carte C2-1 peut cependant être utilisée.

La détermination d'une première séquence de transaction peut être d'utiliser la carte C1-1 pour un montant de 50€ puis d'utiliser la carte C2-1 pour la somme restante. Une autre séquence de transaction peut être de n'utiliser que la carte C2-1 pour cette transaction.

Ces deux propositions de séquence peuvent être affichées au conducteur locataire de la voiture pour une validation. Le système peut également opter pour la première solution automatiquement si une règle de transaction déjà définie et apprise par le système est instruite pour donner une priorité à la carte virtuelle du loueur.

Dans un autre exemple, l'information extraite de la requête de transaction est le nom d'un fournisseur de repas à emporter, le montant de la transaction et l'adresse de ce fournisseur. Les informations issues du système informatique du véhicule sont par exemple, l'heure, la localisation du véhicule et le fait que celui-ci-roule à une vitesse V. L'analyse de ces données permet de déterminer que la transaction concerne un achat de repas à emporter chez un fournisseur situé à 1h de trajet, pour un montant de 18€ et que le véhicule est en route et donc en mouvement vers ce fournisseur.

L'étape de détermination d'une séquence d'utilisation des cartes du portefeuille électronique prend en compte à la fois le contexte déterminé, les personnes présentes dans le véhicule et les caractéristiques des cartes enregistrées. Dans cet exemple, les personnes identifiées dans le véhicule sont par exemple l'utilisateur U1 ainsi qu'un utilisateur U4 non connu du système informatique du véhicule. La catégorie de la transaction ne permet pas d'utiliser la carte C1-1, la donnée de caractéristique associée étant uniquement pour une catégorie essence, péage. Les cartes C2-1 et C2-2 peuvent être utilisées puisqu'elles ont une donnée de catégorie compatible. Le montant est inférieur au plafond de la carte C2-2. Cependant, le contexte indiquant que le véhicule est en mouvement permet de déterminer qu'il est préférable d'utiliser une carte qui ne nécessite pas de validation par code, afin de ne pas distraire le conducteur de la voiture. Ainsi, la carte C2-2, qui nécessite une validation par code, n'est pas à privilégier. Seule la carte C-2-1 est alors proposée, le mode de validation étant effectué par une commande vocale. La séquence proposée à l'utilisateur est donc celle utilisant la carte C2-1 pour cette transaction.

On décrit à présent un premier exemple de réalisation pour une application à une habitation comme illustré à la figure 2. Le portefeuille électronique associé à l'habitation est par exemple comme celui illustré à la figure 4a où les cartes des utilisateurs U1, U2, et U3, occupants de l'habitation, sont enregistrées. Pour cet exemple de réalisation, la carte C1-2 a une donnée liée aux droits d'utilisation restreint ici au fait que U1 doit être présent (Dc1-2=si U1 présent), de même la donnée Dc2-2 donne une restriction d'utilisation à la présence de U2 dans l'habitation pour la carte C2-2. La donnée de catégorie (Da1-2) de la carte C1-2 est égale à la catégorie « multimédia », celle (Da2-2) de la carte C2-2 est égale à « alimentation » et celle (Da2-3) de la carte C2-3 est égale à « Fournisseur de pizza P1 ». La donnée de plafond de la carte C2-2 est Db2-2=19€ et celle de la carte C2-3 est Db2-3=30€.

Enfin la donnée d'agenda de la carte C1-2, Dd1-2 est égale à une date limite d'utilisation « jusqu'au 31/12/2021 », celle de la carte C2-2 à des jours spécifiques Dd2-2= « tous les jours sauf le dimanche et jours fériés » et celle de la carte C2-3 est égale à une date de limite d'utilisation Dd2-3= « jusqu'au 30/11/2021 ». Ainsi, une transaction possible dans ce cas de figure est une demande de livraison de repas au domicile. Les données extraites de la requête de transaction sont par exemple le nom du fournisseur de service (livreur de pizza P1), le nombre de pizzas commandées et le montant (30€). Les données issues du dispositif de gestion de l'habitation sont par exemple la date et l'heure. A partir de ces données, le contexte de transaction peut être déterminé. L'analyse de ces données permet de déterminer que la transaction concerne une livraison de 2 pizzas, d'un montant de 30€, commandées chez le fournisseur P1, le mardi 23 Novembre à 20h.

L'identification des personnes présentes à ce moment-là dans l'habitation a été effectuée à l'étape E31. Les utilisateurs U2 et U3 ont été détectés comme présents. Afin de déterminer une séquence de transaction adaptée à cette transaction spécifique, les caractéristiques des cartes virtuelles sont analysées en prenant en compte les caractéristiques de ces cartes. Une mise en correspondance entre les données de caractéristiques des cartes de transaction et les données de contexte de transaction déterminées et/ou les listes de personnes présentes est effectuée. Lorsqu'une ou plusieurs correspondances sont trouvées, les cartes concernées sont sélectionnées pour déterminer une séquence adaptée à la transaction correspondant à la requête reçue. Pour cet exemple, seuls les utilisateurs U2 et U3 étant présents, les cartes de ces deux utilisateurs sont considérées pour déterminer les séquences possibles de transaction. En effet, les cartes de transaction de U1 ne permettent pas une utilisation sans la présence de U1 dans l'habitation. Les données de catégorie spécifiées pour les cartes C2-2 et C2-3 sont compatibles avec la transaction, de même que les données d'agenda des cartes C2-2 et C2-3 sont compatibles avec la transaction. La donnée de plafond de la carte C2-2 est inférieure au montant total mais compatible au montant divisé par deux et la donnée de plafond de la carte C2-3 est compatible avec le montant total de la transaction.

Ainsi, une séquence de transaction possible est par exemple l'utilisation de la carte C2-2 et de la carte C3-1 pour un montant divisé par 2 (30€/2=15€) ou bien l'utilisation des cartes C2-3 et C3-1 pour un montant de 15€ pour chacune des cartes. Ces deux séquences sont proposées aux utilisateurs présents dans l'habitation, par exemple sur l'interface de leur mobile pour qu'ils valident cette proposition de séquence. En fonction de leur choix, le dispositif de gestion de l'habitation apprend que la séquence de transaction validée peut être enregistrée comme une règle de transaction pour une utilisation future afin d'optimiser les propositions de séquences pour les transactions futures.

Dans un autre exemple de transaction pour une habitation, une commande de cartouches d'encre est par exemple initiée chez un fournisseur de cartouches d'encre. Les données extraites de la requête de transaction sont par exemple, le montant de la commande, le nombre de cartouches, la date et le nom du fournisseur E. Les informations fournies par le dispositif de gestion de l'habitation sont, par exemple, la date, l'heure et le message d'alerte envoyée par l'imprimante connectée qui a détecté un manque de produits. L'analyse de ces données permet de déterminer que la transaction concerne une commande de cartouches d'encre chez le fournisseur E et que la commande a été initiée par un message d'alerte de l'imprimante. L'identification des utilisateurs de l'habitation correspond ici aux occupants tels qu'enregistrés dans le portefeuille électronique, c'est-à-dire ici, dans le cas d'un portefeuille tel qu'illustré à la figure 4a, les utilisateurs U1, U2 et U3. En effet une des règles de transaction enregistrée dans le portefeuille est ici le fait qu'une dépense de fourniture pour l'imprimante concerne tous les occupants de la maison et que la dépense est donc à diviser par le nombre d'occupants. Une séquence possible d'utilisation des cartes est alors par exemple l'utilisation des cartes C1-1, C2-1 et C3-1 pour un montant divisé par 3. Les autres cartes ne concernent pas la catégorie visée et ne sont donc pas utilisables.

De nombreux exemples peuvent ainsi être déclinés pour mettre en œuvre le procédé décrit à la figure 3 selon l'invention.

## Revendications

1. Procédé de gestion d'un portefeuille électronique associé à un équipement connecté partagé, le portefeuille électronique comportant une pluralité de cartes virtuelles de transaction, le procédé comportant les étapes suivantes :
- réception d'une requête de transaction en provenance d'un dispositif de fourniture de services ou de produits ;
- détermination d'une séquence d'utilisation d'au moins deux cartes virtuelles de transaction du portefeuille électronique pour la requête de transaction reçue, par analyse de caractéristiques associées aux cartes virtuelles de transaction du portefeuille électronique et/ou en fonction d'une identification d'au moins deux utilisateurs de l'équipement partagé.

2. Procédé selon la revendication 1, dans lequel la détermination de la séquence prend en compte en outre, un contexte de transaction à partir de données extraites de la requête de transaction et/ou de données issues de l'équipement partagé.

3. Procédé selon l'une des revendications 1 ou 2, dans lequel l'identification des au moins deux utilisateurs de l'équipement partagé comprend une identification des personnes présentes dans l'équipement partagé.

4. Procédé selon la revendication 1, dans lequel la requête de transaction comprend des données d'informations de la transaction comprises dans le groupe :
- catégorisation de la transaction ;
- montant de la transaction ;
- identité du marchand vers lequel la transaction s'effectue.

5. Procédé selon la revendication 2, pour lequel l'équipement connecté partagé est un véhicule connecté partagé dans lequel les données issues du véhicule partagé sont des données comprises dans le groupe :
- données de localisation du véhicule ;
- données temporelles ;
- données de vitesse du véhicule.

6. Procédé selon l'une des revendications précédentes, dans lequel des règles de transaction impliquant l'utilisation d'une ou de plusieurs cartes virtuelles du portefeuille électronique sont enregistrées dans le portefeuille électronique associé à l'équipement connecté partagé.

7. Procédé selon la revendication 6, dans lequel les règles de transaction sont des règles de priorisation d'utilisation des cartes virtuelles enregistrées selon une catégorisation de la transaction ou selon une identification des personnes présentes dans l'équipement.

8. Procédé selon l'une des revendications 6 et 7, dans lequel une règle de transaction est une répartition d'un montant de la transaction entre les personnes identifiées utilisateurs de l'équipement partagé.

9. Procédé selon l'une des revendications précédentes, dans lequel la séquence d'utilisation d'au moins une carte virtuelle de transaction est affichée ou vocalisée sur une interface utilisateur de l'équipement partagé avec une demande de validation.

10. Procédé selon l'une des revendications 6 à 8 et la revendication 9, dans lequel une mise à jour des règles de transaction est effectuée suite à la validation ou la non-validation de la séquence via l'interface utilisateur.

11. Dispositif de gestion d'un portefeuille électronique associé à un équipement connecté partagé, le portefeuille électronique comportant une pluralité de cartes virtuelles de transaction, le dispositif de gestion comportant un module de communication, une mémoire et un processeur apte à piloter les étapes suivantes :
- réception d'une requête de transaction en provenance d'un dispositif de fourniture de services ou de produits ;
- détermination d'une séquence d'utilisation d'au moins deux cartes virtuelles de transaction du portefeuille électronique pour la requête de transaction reçue, par analyse de caractéristiques associées aux cartes virtuelles de transaction du portefeuille électronique et/ou en fonction d'une identification d'au moins deux utilisateurs de l'équipement partagé.

12. Véhicule connecté comprenant un dispositif de gestion selon la revendication 11.

13. Dispositif selon la revendication 11, tel qu'il est compris dans un dispositif de gestion d'une habitation connectée partagée.

14. Support d'informations lisible par un processeur sur lequel est enregistré un programme informatique comprenant des instructions pour l'exécution des étapes du procédé de gestion selon l'une des revendications 1 à 10.
